# EUROPÄISCHE PATENTSCHRIFT

(11) **EP 1 983 323 B1**
(45) Veröffentlichungstag und Bekanntmachung des Hinweises auf die Patenterteilung: **16.11.2011**
(21) Anmeldenummer: 08003232.9
(22) Anmeldetag: 22.02.2008
(51) Int. Cl.: G01L 5/16

(54) **Mehrkomponenten-Kraftmesseinrichtung**
Multi-component force measuring device
Dispositif de mesure de plusieurs composants de force

(30) Priorität: 20.04.2007 DE 102007019180
(43) Veröffentlichungstag der Anmeldung: 22.10.2008
(73) Patentinhaber: GTM Gassmann Testing and Metrology GmbH, 64404 Bickenbach (DE)
(72) Erfinder: Gassmann, Helmut, Dr., 64342 Seeheim-Jugenheim (DE)
(74) Vertreter: Katscher Habermann Patentanwälte

(56) Entgegenhaltungen:
- EP-A2- 0 715 157
- EP-A2- 1 398 606
- DE-B3- 10 247 972
- DE-C1- 10 217 019
- US-A- 4 616 511
- US-A- 5 490 427

## Beschreibung

Die Erfindung betrifft eine Mehrkomponenten-Kraftmesseinrichtung mit einer in Krafthauptrichtung einer zu messenden Kraft wirksamen Kraftmessdose und mit mindestens zwei Querkraft-Messeinrichtungen.

In vielen Anwendungsfällen, insbesondere auch bei der Prüfung von Kraftaufnehmern, im speziellen Fall Kraftnormalmesseinrichtungen, ist es erwünscht, die zu messenden Kräfte hinsichtlich aller bestimmenden Größen, nämlich Betrag, Winkel und Raumkoordinaten, präzise darzustellen und zu bestimmen. Dabei geht es nicht nur um die exakte Abbildung der Größe Kraft durch die sie bestimmenden Komponenten, sondern vor allem auch um die Möglichkeit, die Messunsicherheiten von Mehrkomponenten-Kraftaufnehmern erheblich zu reduzieren, nach Möglichkeit auf das Niveau von Einkomponenten-Vergleichsnormalen.

Eine messtechnische Definition einer großen Kraft mit sehr hoher Genauigkeit ist bisher praktisch nur durch Totlastmaschinen möglich. Die Handhabung großer Totlasten ist jedoch aufwendig und unpraktisch. Außerdem besteht eine wesentliche Einschränkung darin, dass bei Totlastmaschinen die Kraftrichtung und Kraftgröße durch die Schwerkraft vorgegeben ist. Die Kraftrichtung kann daher nicht in beliebigem räumlichem Verlauf gewählt werden.

Mehrkomponenten-Kraftmesseinrichtungen der eingangs genannten Gattung sind zwar bekannt; siehe z.B. US 4,616,511, DE 102 17 019, DE 102 47 92, EP 0 715 157, US 5, 490, 427 sie ermöglichen aber nur die Erfassung von Querkrafteinflüssen bei der Kraftmessung mittels einer Kraftmessdose. Eine vollständige Darstellung der gemessenen Kräfte hinsichtlich aller bestimmenden Größen, nämlich Betrag, Winkel und Raumkoordinaten, ist damit jedoch nicht möglich.

Aufgabe der Erfindung ist es daher, eine Mehrkomponenten-Kraftmesseinrichtung der eingangs genannten Gattung so auszubilden, dass alle die zu messende Kraft bestimmenden Größen erfasst werden und die Kraft nach Betrag, Winkel und Raumkoordinaten mit hoher Genauigkeit dargestellt werden kann.

Diese Aufgabe wird erfindungsgemäß dadurch gelöst, dass die Kraftmessdose über eine von Querkrafteinflüssen entkoppelnde Stützeinrichtung in Krafthauptrichtung an einem Basiskörper abgestützt ist, dass zwischen dem Basiskörper und der Kraftmessdose ein Querkräfte in zwei Achsen übertragender und messender Querkraft-Verformungskörper angeordnet ist, der gegen eine Krafteinleitung in Krafthauptrichtung entkoppelt ist, und dass auf der dem Basiskörper entgegengesetzten Seite der Kraftmessdose ein Krafteinleitungskörper angeordnet ist, der mit der Kraftmessdose über eine Biegemoment-Messeinrichtung verbunden ist.

Die Kraftmessdose ist in Krafthauptrichtung von Querkrafteinflüssen entkoppelt. Die räumliche Winkelabweichung der zu messenden Kraft von der durch die Geometrie der Kraftmessdose vorgegebenen Krafthauptrichtung wird durch Verformung des Querkraft-Verformungskörpers gemessen. Dieser ist wiederum gegen die Einleitung einer Kraft in Krafthauptrichtung entkoppelt, so dass die Bestimmung der Querkräfte unbeeinflusst von der sehr viel größeren Kraftkomponente in Krafthauptrichtung erfolgt.

Die Angriffsstelle der zu messenden Kraft wird durch die Biegemoment-Messeinrichtung bestimmt. Wenn die zu messende Kraft zentral in die Kraftmessdose eingeleitet wird, tritt kein Biegemoment an der Krafteinleitungsstelle auf. Wird dort jedoch ein Biegemoment gemessen, so lässt sich daraus die Angriffsstelle der zu messenden Kraft bestimmen.

Die zu bestimmende Kraft wird daher mit hoher Genauigkeit durch die sie bestimmenden Komponenten abgebildet. Die Messunsicherheiten der heute verfügbaren Mehrkomponenten-Kraftaufnehmer können damit auf das Niveau von Vergleichsnormalen reduziert werden.

Darüber hinaus kann der Anwender mit Hilfe der erfindungsgemäßen Mehrkomponenten-Kraftmesseinrichtung auch große Kräfte ohne das unpraktische Handhaben aufwendiger Totlasten exakt darstellen und bestimmen. Die Mehrkomponenten-Kraftmesseinrichtung kann als Kraftvektor normal eingesetzt werden, das auch für den mobilen Einsatz geeignet ist, womit erstmalig 6-Komponenten-Messeinrichtungen an die nationalen Kraft- und Momentennormale angeschlossen werden können, die im allgemeinen durch aufwendige Totlastmaschinen realisiert sind. Auch die Überprüfung bestehender Kraftnormalmesseinrichtungen auf Richtung und Lage der erzeugten Normalkraft wird hierdurch erstmalig möglich.

Vorzugsweise ist die verwendete Kraftmessdose eine Biegering-Kraftmessdose. Solche Biegering-Kraftmessdosen sind in unterschiedlichen Ausführungsformen bekannt und für die Kraftmessung in besonderem Maße geeignet.

Um die Biegering-Kraftmessdose von Querkrafteinflüssen zu entkoppeln, wird gemäß einer vorteilhaften Ausführungsform der Erfindung ein Außenring der Biegering-Kraftmessdose über in Krafthauptrichtung verlaufende Pendel-Biegestützen am Basiskörper abgestützt. Diese Biegestützen stellen eine fertigungstechnisch und konstruktiv einfache Möglichkeit dar, einerseits hohe Kräfte in Krafthauptrichtung zu übertragen, andererseits aber den Einfluss von rechtwinklig dazu verlaufenden Querkräften weitestgehend zu eliminieren.

In Ausgestaltung des Erfindungsgedankens ist vorgesehen, dass der Querkraft-Verformungskörper mit der Kraftmessdose und/oder dem Basiskörper über eine sich quer zur Krafthauptrichtung erstreckende Membran verbunden ist. Diese Membran überträgt in Richtung der Membranebene gerichtete Querkräfte; sie ist in Normalrichtung hierzu, d.h. in der Krafthauptrichtung, jedoch so leicht verformbar, dass der Einfluss der in Krafthauptrichtung wirkenden, verhältnismäßig hohen Kraftkomponente auf die Querkraftmessung weitestgehend eliminiert ist.

Der zur Bestimmung der Querkräfte in zwei Achsen dienende Querkraft-Verformungskörper ist vorzugsweise ein im Querschnitt quadratischer Hohlkörper, dessen Wände mit Dehnungsmessstreifen bestückt sind. Damit lässt sich die Bestimmung der Querkräfte in zwei Achsen in einfacher Weise und mit geringem Platzbedarf durchführen.

Weitere vorteilhafte Ausgestaltungen des Erfindungsgedankens sind Gegenstand weiterer Unteransprüche.

Die Erfindung wir nachfolgend an einem Ausführungsbeispiel näher erläutert, das in der Zeichnung dargestellt ist. Es zeigt:

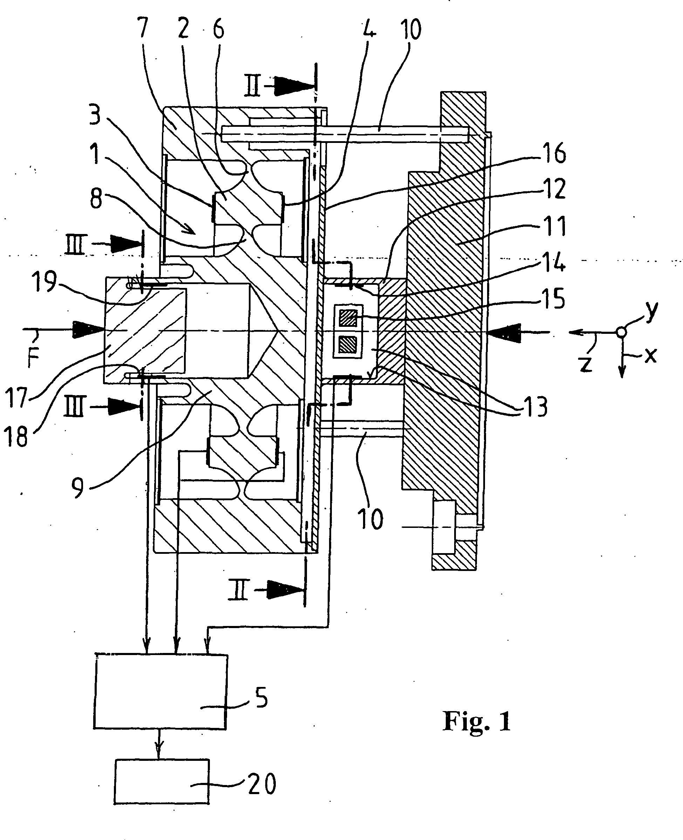

Fig. 1 eine Mehrkomponenten-Kraftmesseinrichtung im Längsschnitt,
Fig. 2 einen Schnitt längs der Linie II-II in Fig. 1 und
Fig. 3 einen Schnitt längs der Linie III-III in Fig. 1.

Die in der Zeichnung dargestellte Mehrkomponenten-Kraftmesseinrichtung bildet einen Vektorsensor, der die Bestimmung einer Kraft hinsichtlich aller sie bestimmenden Größen, nämlich Betrag, Winkel und Raumkoordinaten, ermöglicht. Die Mehrkomponenten-Kraftmesseinrichtung weist eine als Biegering-Kraftmessdose ausgeführte Kraftmessdose 1 auf, die rotationssymmetrisch gestaltet ist und deren durch ihre Geometrie vorgegebene Achse hier als Krafthauptrichtung z bezeichnet wird.

Die Biegering-Kraftmessdose 1 weist einen Biegring 2 auf, der an seinen beiden Stirnseiten Dehnungsmessstreifen 3, 4 trägt, die beispielsweise jeweils umlaufende Windungen bilden und mit einer elektronischen Auswerteeinrichtung 5 verbunden sind. Der Biegering 2 ist über einen umlaufenden Ringsteg 6, der ein Biegegelenk bildet, mit einem Außenring 7 verbunden. Der Biegering 2 ist über einen inneren Ringsteg 8, der ein Biegegelenk bildet, mit einem zentralen, teilweise hohlzylindrisch ausgeführten Innenkörper 9 verbunden. Eine zwischen dem zentralen Innenkörper 9 und dem Außenring 7 in Krafthauptrichtung z wirkende Kraft führt zu einer Verformung des Biegerings 2 in der Weise, dass die Dehnungsmessstreifen 3 auf der einen Stirnseite des Biegerings 2 gestaucht und die Dehnungsmessstreifen 4 auf der anderen Stirnseite des Biegerings 2 gedehnt werden. Diese entgegengesetzten Längenänderungen der Dehnungsmessstreifen 3 und 4 führen jeweils zu einer Änderung des elektrischen Widerstands und liefern damit Messsignale an die Auswerteeinrichtung 5.

Der Außenring 7 der Kraftmessdose 1 ist über drei als schlanke Biegestäbe ausgeführte Pendel-Biegestützen 10 an einem beispielsweise plattenförmigen Basiskörper 11 abgestützt. Die Pendel-Biegestützen 10 erstrecken sich in der Krafthauptrichtung z. Die Pendel-Biegestützen 10 sind bei dem dargestellten Ausführungsbeispiel jeweils an ihren beiden Enden eingespannt. Die Entkoppelungswirkung ergibt sich durch die mit sehr geringer Kraft erzielte S-förmige Durchbiegung der Pendel-Biegestützen 10. Statt dessen ist auch eine Ausführung als reine Druckstäbe ohne Einleitung eines Biegemoments möglich.

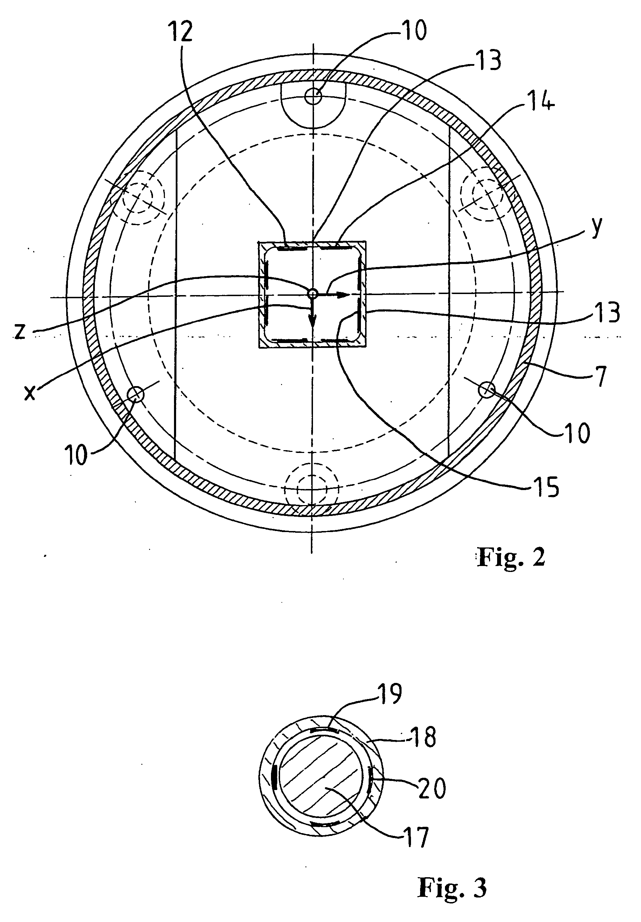

Zwischen dem Basiskörper 11 und der Biegering-Kraftmessdose 1 ist ein Querkraft-Verformungskörper 12 angeordnet, der bei dem dargestellten Ausführungsbeispiel ein im Querschnitt (Fig. 2) quadratischer Hohlkörper ist, dessen Wände 13 an ihren Innenseiten mit Dehnungsmessstreifen 14, 15 bestückt sind. Statt dessen kann der Querkraft-Verformungskörper auch mit anderer Querschnitsform ausgeführt sein, beispielsweise mit rundem Hohl- oder Vollquerschnitt. Die Dhnungsmessstreifen können auch an der Außenseite des Querkraft-Verformungskörpers 12 appliziert sein.

Die Dehnungsmessstreifen 14, 15 sind mit der Auswerteeinrichtung 5 verbunden und dienen zur Bestimmung der in Richtung der Achsen x und y auftretenden Querkräfte. Hierzu ist der Querkraft-Verformungskörper 12 einerseits an dem Basiskörper 11 und andererseits an einer Membran 16 festgelegt, die sich quer zur Krafthauptrichtung z erstreckt und mit dem Außenring 7 der Kraftmessdose 1 verbunden ist. Stattdessen könnte die Membran auch zwischen dem Querkraft-Verformungskörper 12 und dem Basiskörper 11 angeordnet sein, wobei dann eine starre Verbindung des Querkraft-Verformungskörpers 12 mit dem Außenring 7 der Kraftmessdose 1 gewählt würde.

Die Membran 16, die in Krafthauptrichtung z leicht verformbar und in der durch die Achsen x, y bestimmten Normalebene hierzu weitgehend starr ist, überträgt die in Richtung der Achsen x, y wirkenden Querkräfte auf den Querkraft-Verformungskörper 12 und entkoppelt diesen jedoch weitestgehend von der in Krafthauptrichtung z wirkenden, gegenüber den Querkräften wesentlich höheren Axialkraft.

Die zu messende Kraft F wird stirnseitig an einem Krafteinleitungskörper 17 eingeleitet, wobei die Krafteinleitung nur im Idealfall exakt in der Krafthauptrichtung z und in der Mittelachse der Kraftmessdose 1 erfolgt. Praktisch ist davon auszugehen, dass die zu messende Kraft F außerhalb der Mittelachse und räumlich in einem Winkel zur Krafthauptrichtung z eingeleitet wird.

Zwischen dem Krafteinleitungskörper 17 und dem Innenkörper 9 der Kraftmessdose 1 ist ein Hohlzylinder 18 angeordnet, der sowohl mit dem Krafteinleitungskörper 17 als auch mit dem Innenkörper 9 der Kraftmessdose 1 biegesteif verbunden ist. Der Hohlzylinder 18 ist an seiner Zylinderwand mit Dehnungsmessstreifen 19, 20 bestückt, die mit der Auswerteeinrichtung 5 verbunden sind. Die Dehnungsmessstreifen 19, 20 sind an der Innenseite der Zylinderwand des Hohlzylinders 18 appliziert. Statt dessen ist auch möglich, die Dehnungsmessstreifen an der Außenseite zu applizieren. Bei einer exzentrischen Einleitung der Kraft F am Krafteinleitungskörper 17 tritt im Hohlzylinder 18 ein Biegemoment auf, das durch Längenänderungen der Dehnungsmessstreifen 19, 20 und damit hervorgerufene Änderungen elektrischen Widerstands in ein Messsignal umgesetzt wird, das der Auswerteeinrichtung 5 zugeleitet wird.

Wenn die zu messende Kraft F in die Mehrkomponenten-Kraftmesseinrichtung eingeleitet und über deren Basiskörper 11 abgestützt wird, wird die in Krafthauptrichtung z wirkende Kraftkomponente durch die Biegering-Kraftmessdose 1 bestimmt. Querkräfte in Richtung der Achsen x und y infolge einer Winkelabweichung der Kraft F von der Hauptkraftrichtung z werden über den Querkraft-Verformungskörper 12 und dessen Dehnungsmessstreifen 14, 15 ermittelt. Eine exzentrische Abweichung des Angriffspunktes der Kraft F von der Mittelachse des Krafteinleitungskörpers 17 führt zu einem Biegemoment, das über eine Verformung des Hohlzylinders 18 und Längenänderungen der dort applizierten Dehnungsmessstreifen 19, 20 bestimmt wird.

Somit liegen in der Auswerteeinrichtung alle die Kraft F bestimmenden Größen vor, nämlich Betrag, Winkel und Raumkoordinaten, die rechnerisch zu einer vollständigen und mit hoher Genauigkeit auszuführenden Definition der Kraft F verwendet werden. Die Auswerteeinrichtung 5 ist mit einer nur schematisch angedeuteten Ausgabe- oder Anzeigeeinrichtung 20 verbunden.

Da die Bestimmung der zu messenden Kraft F - im Gegensatz zur Verwendung einer Totlastmaschine - ohne Einfluss der Schwerkraft erfolgt, kann die Mehrkomponenten-Kraftmesseinrichtung in beliebiger Richtung eingesetzt werden, so dass ein mobiler Einsatz ermöglicht wird. Damit können bestehende Kraftnormalmesseinrichtungen auf Richtung und Lage der erzeugten Normalkraft überprüft werden. Die Mehrkomponenten-Kraftmesseinrichtung bildet somit ein Transfernormal.

## Patentansprüche

1. Mehrkomponenten-Kraftmesseinrichtung mit einer in Krafthauptrichtung (z) einer zu messenden Kraft (F) wirksamen Kraftmessdose (1) und mit mindestens zwei Querkraft-Messeinrichtungen, **dadurch gekennzeichnet, dass** die Kraftmessdose (1) über eine von Querkrafteinflüssen entkoppelnde Stützeinrichtung (10) in Krafthauptrichtung (z) an einem Basiskörper (11) abgestützt ist, dass zwischen dem Basiskörper (11) und der Kraftmessdose (1) ein Querkräfte in zwei Achsen (x, y) übertragender und messender Querkraft-Verformungskörper (12) angeordnet ist, der gegen eine Krafteinleitung in Krafthauptrichtung (z) entkoppelt ist, und dass auf der dem Basiskörper (11) entgegengesetzten Seite der Kraftmessdose (1) ein Krafteinleitungskörper (17) angeordnet ist, der mit der Kraftmessdose (1) über eine Biegemoment-Messeinrichtung (18, 19, 20) verbunden ist.

2. Mehrkomponenten-Kraftmesseinrichtung nach Anspruch 1, **dadurch gekennzeichnet, dass** die Kraftmessdose (1) eine Biegering-Kraftmessdose ist.

3. Mehrkomponenten-Kraftmesseinrichtung nach Anspruch 2, **dadurch gekennzeichnet, dass** ein Außenring (7) der Biegering-Kraftmessdose (1) über in Krafthauptrichtung (z) verlaufende Pendel-Biegestützen (10) am Basiskörper (11) abgestützt ist.

4. Mehrkomponenten-Kraftmesseinrichtung nach Anspruch 1, **dadurch gekennzeichnet, dass** der Querkraft-Verformungskörper (12) mit der Kraftmessdose (1) und/oder dem Basiskörper (11) über eine sich quer zur Krafthauptrichtung (z) erstreckende Membran (16) verbunden ist.

5. Mehrkomponenten-Kraftmesseinrichtung nach Anspruch 4, **dadurch gekennzeichnet, dass** der Querkraft-Verformungskörper (12) ein im Querschnitt quadratischer Hohlkörper ist, dessen Wände (13) mit Dehnungsmessstreifen (14, 15) bestückt sind.

6. Mehrkomponenten-Kraftmesseinrichtung nach Anspruch 5, **dadurch gekennzeichnet, dass** die Dehnungsmessstreifen (14, 15) an den Innenseiten der Wände (13) des Querkraft-Verformungskörpers (12) appliziert sind.

7. Mehrkomponenten-Kraftmesseinrichtung nach Anspruch 1, **dadurch gekennzeichnet, dass** die Biegemoment-Messeinrichtung einen mit dem Krafteinleitungskörper (17) und dem Innenkörper (9) der Kraftmessdose (1) biegesteif verbundenen Hohlzylinder (18) aufweist, dessen Zylinderwand mit Dehnungsmessstreifen (19, 20) bestückt ist.

8. Mehrkomponenten-Kraftmesseinrichtung nach Anspruch 7, **dadurch gekennzeichnet, dass** die Dehnungsmessstreifen (19, 20) an der Innenseite der Zylinderwand appliziert sind.

## Claims

1. Multiple-component force measuring device having a load cell (1) which is active in the main force direction (z) of a force (F) to be measured and having at least two transverse-force measuring devices, **characterized in that** the load cell (1) is supported in the main force direction (z) on a basic body (11) via a supporting device (10) which decouples from transverse-force influences, **in that** a transverse-force deformation body (12) which transmits and measures transverse forces in two axes (x, y) and is decoupled with respect to an introduction of force in the main force direction (z) is arranged between the basic body (11) and the load cell (1), and **in that** a force introduction body (17) which is connected to the load cell (1) via a bending-moment measuring device (18, 19, 20) is arranged on that side of the load cell (1) which is opposite the basic body (11).

2. Multiple-component force measuring device according to Claim 1, **characterized in that** the load cell (1) is a bending-ring load cell.

3. Multiple-component force measuring device according to Claim 2, **characterized in that** an outer ring (7) of the bending-ring load cell (1) is supported on the basic body (11) via hinged bending supports (10) which extend in the main force direction (z).

4. Multiple-component force measuring device according to Claim 1, **characterized in that** the transverse-force deformation body (12) is connected to the load cell (1) and/or the basic body (11) via a diaphragm (16) which extends transversely with respect to the main force direction (z).

5. Multiple-component force measuring device according to Claim 4, **characterized in that** the transverse-force deformation body (12) is a hollow body which has a square cross section and the walls (13) of which are fitted with strain gauges (14, 15).

6. Multiple-component force measuring device according to Claim 5, **characterized in that** the strain gauges (14, 15) are applied to the inner sides of the walls (13) of the transverse-force deformation body (12).

7. Multiple-component force measuring device according to Claim 1, **characterized in that** the bending-moment measuring device has a hollow cylinder (18) which is connected in a flexurally stiff manner to the force introduction body (17) and the inner body (9) of the load cell (1), and the cylinder wall of which hollow cylinder (18) is fitted with strain gauges (19, 20).

8. Multiple-component force measuring device according to Claim 7, **characterized in that** the strain gauges (19, 20) are applied to the inner side of the cylinder wall.

## Revendications

1. Dispositif pour la mesure de forces à plusieurs composantes, présentant un boîtier (1) de mesure de force actif dans la direction principale (z) d'une force (F) à mesurer et au moins deux dispositifs de mesure de force transversale,
**caractérisé en ce que**
le boîtier (1) de mesure de force s'appuie sur un corps de base (11) par un dispositif d'appui (10) qui découple les effets des forces transversales dans la direction principale (z) de la force,
**en ce qu'**entre le corps de base (11) et le boîtier (1) de mesure de force est disposé un corps (12) déformable par les forces transversales, qui transfère et mesure les forces transversales suivant deux axes (x, y) et qui est découplé des forces agissant dans la direction principale (z) de la force et
**en ce qu'**un corps (17) d'introduction de force relié au boîtier (1) de mesure de force par un dispositif de mesure (18, 19, 20) à couple de flexion est disposé sur le côté du boîtier (1) de mesure de force non tourné vers le corps de base (11).

2. Dispositif pour la mesure de forces à plusieurs composantes selon la revendication 1, **caractérisé en ce que** le boîtier (1) de mesure de force est un boîtier de mesure de force à bague de flexion.

3. Dispositif pour la mesure de forces à plusieurs composantes selon la revendication 2, **caractérisé en ce qu'**une bague extérieure (7) du boîtier (1) de mesure de force à bague de flexion s'appuie sur le corps de base (11) par l'intermédiaire d'un appui fléchissant pendulaire (10) qui s'étend dans la direction principale (z) de la force.

4. Dispositif pour la mesure de forces à plusieurs composantes selon la revendication 1, **caractérisé en ce que** le corps (12) déformable par les forces transversales est relié au boîtier (1) de mesure de force et/ou au corps de base (11) par une membrane (16) qui s'étend transversalement par rapport à la direction principale (z) de la force.

5. Dispositif pour la mesure de forces à plusieurs composantes selon la revendication 4, **caractérisé en ce que** le corps (12) déformable sous la force transversale est un corps creux de section transversale carrée dont les parois (13) sont dotées de rubans (14, 15) de mesure d'allongement.

6. Dispositif pour la mesure de forces à plusieurs composantes selon la revendication 5, **caractérisé en ce que** les rubans (14, 15) de mesure d'allongement sont appliqués sur les côtés intérieurs des parois (13) du corps (12) déformable par les forces transversales.

7. Dispositif pour la mesure de forces à plusieurs composantes selon la revendication 1, **caractérisé en ce que** le dispositif de mesure à couple de flexion présente un cylindre creux (18) relié de façon rigide en flexion au corps (17) d'application de force et au corps intérieur (9) du boîtier (1) de mesure de force, la paroi du cylindre étant équipée de rubans (19, 20) de mesure d'allongement.

8. Dispositif pour la mesure de forces à plusieurs composantes selon la revendication 7, **caractérisé en ce que** les rubans (19, 20) de mesure d'allongement sont appliqués sur le côté intérieur de la paroi du cylindre.
